# EUROPÄISCHE PATENTANMELDUNG

(11) **EP 1 385 069 A2**
(43) Veröffentlichungstag der Anmeldung: **28.01.2004**
(21) Anmeldenummer: 03016735.7
(22) Anmeldetag: 22.07.2003
(51) Int. Cl.: G05B 19/04

(54) **Verfahren zum Verarbeiten von Daten einer Anlage**

(30) Priorität: 23.07.2002 DE 10233435
(71) Anmelder: SIEMENS AKTIENGESELLSCHAFT, 80333 München (DE)
(72) Erfinder: Averbeck, Gerd, 91077 Neunkirchen (DE); Langer, Gerhard, 91126 Schwabach (DE); Zahner, Ulrich, Dr., 91052 Erlangen (DE)

(57) **Zusammenfassung**

Die Erfindung betrifft ein Verfahren zum Verarbeiten von Daten unterschiedlicher Subsysteme innerhalb einer technischen Anlage, die insbesondere ein Schienenfahrzeug ist. Es ist vorgesehen, dass die Subsysteme in bezug auf ihren Datenhaushalt, ihre Funktionalitäten und die Schnittstellen zwischen den Funktionalitäten einheitlich strukturiert sind. Das bedeutet, dass die Subsysteme nach einem einheitlichen Modell aufgebaut und beschrieben sind. Der Aufbau komplexer Netzwerke ist möglich.

## Beschreibung

Die Erfindung betrifft ein Verfahren zur Verarbeitung von Daten unterschiedlicher Subsysteme innerhalb einer technischen Anlage, die insbesondere ein Schienenfahrzeug ist.

Eine solche Anlage besteht in der Regel aus zahlreichen Subsystemen, wobei jedes Subsystem Informationen bzw. Daten abgibt und erhält. Beispiele für Subsysteme eines Schienenfahrzeugs sind Türen, Klimaanlagen usw. mit ihren Steuerungen.

Weil es sich um unterschiedliche Subsysteme handelt, waren bisher aufwändige Adapter notwendig, um den erforderlichen Datenfluss zu gewährleisten.

Der Erfindung liegt die Aufgabe zugrunde, ein Verfahren zum Verarbeiten von Daten unterschiedlicher Subsysteme, die Teil einer technischen Anlage sind, anzugeben, das ohne aufwändige Adapter und auch ohne aufwändige zentrale Ressourcen, wie z.B. große Datenspeicher, auskommt. Trotzdem sollen alle Daten einer komplexen Anlage, z.B. eines Schienenfahrzeugs, zuverlässig zu verarbeiten sein.

Die Aufgabe wird gemäß der Erfindung dadurch gelöst, dass die Subsysteme in bezug auf ihren Datenhaushalt und ihre inneren Funktionalitäten und in bezug auf die Schnittstellen sowohl zwischen den Funktionalitäten als auch nach außen einheitlich strukturiert sind.

Mit einheitlicher Strukturierung ist gemeint, dass die Subsysteme nach einem einheitlichen Modell aufgebaut sind.

Damit wird der Vorteil erzielt, dass alle Subsysteme von außen gleich erscheinen. Sie reagieren auf Anfragen mit Daten, die eindeutig zugeordnet werden können.

Es ist auch möglich, dass ein Subsystem keine Funktionalität enthält, also für keinen eigenen Verfahrensschritt zuständig ist. Solche Subsysteme enthalten dann nur Referenzen auf andere Subsysteme, d.h. sie stellen eine logische Verbindung mit anderen Subsystemen her und tragen alle Informationen, die nötig sind, um die anderen Subsysteme zu adressieren.

Mit dem strukturierten Aufbau aller Subsysteme einer Anlage nach einem einheitlichen Modell wird insbesondere der Vorteil erzielt, dass der Datenfluss ohne aufwändige Hardware oder Software zwischen den Subsystemen und auch zu einem übergeordneten System einfach und zuverlässig möglich ist.

Vorteilhafte Weiterbildungen des Verfahrens nach der Erfindung sind den Unteransprüchen zu entnehmen.

Beispielsweise hat jedes Subsystem für die Verbindung nach außen mindestens eine Schnittstelle. Über diese Schnittstelle ist in einfacher Weise der standardisierte Datenaustausch mit anderen Subsystemen oder einem übergeordneten System gewährleistet.

Die einheitliche Strukturierung, das heißt das Modell der Subsysteme ist beispielsweise durch eine standardisierte textuelle Notation beschrieben. Damit wird der Vorteil erzielt, dass Daten unabhängig von der Implementierung des Subsystems verarbeitet werden können, weil die standardisierte Beschreibung allgemein verständlich formuliert ist. Es kann sich um Beschreibungen von Verarbeitungsmethoden, Inhalten und Schnittstellen handeln. Dadurch ist eine externe Verarbeitung von Daten aus den Subsystemen mit unabhängigen Mitteln durchführbar. Insbesondere ist der Daten- und Parameterbestand der Subsysteme durch die gleiche textuelle Notation beschrieben.

Die externe Verarbeitung der Daten umfasst alle Tätigkeiten, mit denen das Verhalten des Subsystems beeinflusst und Informationen ausgekoppelt werden können. Eine übergeordnete Datenverarbeitung umfasst z.B. die Projektierung oder Programmierung jedes Subsystems, die Dokumentation und auch die Fehlersuche. Mit dem Verfahren nach der Erfindung werden dazu vereinheitlichte Werkzeuge für die schnelle und unter Umständen gleichzeitige Kommunikation mit den Subsystemen zur Verfügung gestellt.

Beispielsweise ist ein strukturiertes Subsystem in mehrere verschiedene Funktionalitäten enthaltende Komponenten unterteilt, die miteinander geeignet verbunden sind und miteinander kommunizieren.

Dabei kann jede Funktionalität ein komplettes Subsystem darstellen, so dass eine hierarchische Struktur gegeben ist. Aus logischen Knoten und Subsystemen kann ein Hierarchie-Baum entstehen.

Damit ist es vorteilhaft möglich, hierarchische Strukturen aufzubauen, die eine Überwachung und Steuerung großer Anlagen und sogar von mehreren zusammengehörenden Anlagen gewährleistet. Zum Beispiel können ganze Fahrzeugflotten, wie gleichartige Lokomotiven oder Züge, unabhängig von ihrem Standort, in gleicher Weise adressiert werden.

Beispielsweise enthält eine Komponente statt Funktionalitäten nur eine Referenz, die auf eine andere Komponente oder ein Subsystem verweist, so dass z.B. ein logisches Netzwerk aufgebaut ist. Damit können unterschiedliche nebeneinander stehende hierarchische Verbindungen für eine übergeordnete Verarbeitung von Daten auf der Basis einer festen Menge von Systembeschreibungen dargestellt werden.

Mindestens eine Komponente des strukturierten Subsytems enthält beispielsweise einen Speicher für Daten. Dort können aktuelle und spezifische Kenngrößen, die Beschreibung der vorhandenen Schnittstellen sowie Prozessdaten und auch andere Daten gespeichert sein. Daten werden in der Komponente vom Zeitpunkt ihrer Herstellung bis zur Ausmusterung akkumuliert.Dieser Datenbestand kann selektiv ausgelesen und in einem zentralen Datenspeicher archiviert werden. Im Lauf der Zeit können auf diese Weise auch nur einzelne Daten archiviert werden. Es ist auch die Löschung einzelner nicht mehr gebrauchter Daten möglich. Das Verfahren erlaubt eine Ergänzung und ein Überschreiben von Daten. Eine Ergänzung kann dazu führen, dass zusätzliche Inhalte hinzukommen oder dass Daten identischen Inhalts nebeneinander stehen, die sich aber in der Version unterscheiden können.

Zur Verbindung einzelner Funktionalitäten im Inneren einer Komponente sind Schnittstellen vorgesehen, für deren Funktion eine standardisierte textuelle Notation verwendet wird.

Der Speicher einer Komponente enthält beispielsweise auch Daten zur Identifikation des Subsystems. Diese Identifikationsdaten können u.a. eine Herstellerkennung oder eine Typbezeichnung sein und z.B. in der Form eines Barcodes vorliegen.

Anfragen an ein Subsystem, die von außen als Inhalt eines Protokolls kommen, werden beispielsweise zusammen mit dem gleichen Protokoll beantwortet. Dabei können beim Eintreffen einer Anfrage die Zugriffsrechte untersucht werden und eine Anfrage kann gegebenenfalls abgewiesen werden.

Die Zugriffsrechte auf eine Komponente des Subsystems werden beispielsweise über die Kommunikationsschnittstelle geregelt und gespeichert, z.B. über Parameter der Systembeschreibung des Subsystems und/oder der Funktionalität.

Mindestens eine Komponente kann eine Kommunikationsschnittstelle zum Empfang von Anfragen von außen und zur Beantwortung enthalten. Dabei können in der Kommunikationsschnittstelle standardisierte Protokolle empfangen, gelesen und versendet werden. Insbesondere verwenden die Protokolle die gleiche textuelle Notation.

Die Anfragen können auch in üblicher Weise verschlüsselt sein, um einen falschen Zugriff auf den Datenbestand eines Subsystems zu vermeiden. Ein sicherer Ablauf des Verfahrens ist insbesondere dadurch gewährleistet, dass beispielsweise ein einheitliches Sprachmittel und erprobte Schlüsselmechanismen Verwendung finden.

Zusammen mit dem hierarchischen Aufbau ist es möglich, alle Daten der Anlage eindeutig zuzuordnen, so dass sich alle Daten reproduzierbar zusammenfügen lassen. Es wird insbesondere der Vorteil erzielt, dass auf eine Anfrage hin stets mit standardisierten Inhalten geantwortet wird.

Das Verfahren zur Verarbeitung von Daten unterschiedlicher Subsysteme nach der Erfindung zeichnet sich dadurch aus, dass auf eine zentrale Datenhaltung sowie auf Adapter und andere Anpassungsmechanismen verzichtet werden kann. Es können jedoch zentrale Dienste für die Optimierung des Zugriffs auf vorhandene Daten optional eingebracht werden.

Mit dem Verfahren nach der Erfindung können auch komplexe Strukturen aufgebaut werden. Die übergeordnete Verarbeitung von Daten unterschiedlicher Subsysteme oder Komponenten an beliebigen Orten ist in einem heterogenen Netzwerk transparent möglich. Bei Verwendung eines geeigneten einheitlichen Sprachmittels können das Datenschema, die Daten selbst, die Schnittstellen für den Bezug der Daten, sowie die Werkzeuge für die Datenverarbeitung einheitlich beschrieben werden.

Das Verfahren nach der Erfindung wird insbesondere für die Diagnose von Anlagen, wie z.B. Eisenbahnzügen, eingesetzt und ist vorteilhaft durchführbar, auch wenn sich die Züge an verschiedenen Orten befinden. Die Diagnose kann dann von einer beliebigen Stelle aus durchgeführt werden. Auch bei anderen technischen Anlagen, die in weitgehend baugleicher Art an verschiedenen Orten aufgebaut sind, kann eine Diagnose in dieser Weise erfolgen.

Das Verfahren nach der Erfindung ist nicht auf Subsysteme oder Komponenten des Eisenbahnwesens beschränkt. Es kann für beliebige Kommunikationsnetzwerke angewendet werden.

## Patentansprüche

1. Verfahren zur Verarbeitung von Daten unterschiedlicher Subsysteme innerhalb einer technischen Anlage, die insbesondere ein Schienenfahrzeug ist,
**dadurch gekennzeichnet, dass** die Subsysteme in bezug auf ihren Datenhaushalt und ihre innere Funktionalitäten und in bezug auf die Schnittstellen sowohl zwischen den Funktionalitäten als auch nach außen einheitlich strukturiert sind.

2. Verfahren nach Anspruch 1,
**dadurch gekennzeichnet, dass** jedes Subsystem für die Verbindung nach außen mindestens eine Schnittstelle hat.

3. Verfahren nach einem der Ansprüche 1 oder 2,
**dadurch gekennzeichnet, dass** die einheitliche Strukturierung der Subsysteme durch eine standardisierte textuelle Notation beschrieben ist.

4. Verfahren nach Anspruch 3,
**dadurch gekennzeichnet, dass** der Daten- und Parameterbestand der Subsysteme durch die gleiche textuelle Notation beschrieben ist.

5. Verfahren nach einem der Ansprüche 1 bis 4,
**dadurch gekennzeichnet, dass** ein strukturiertes Subsystem in mehrere verschiedene Funktionalitäten enthaltende Komponenten unterteilt ist, die miteinander verbunden sind und miteinander kommunizieren.

6. Verfahren nach Anspruch 5,
**dadurch gekennzeichnet, dass** in einer hierarchischen Struktur Funktionalitäten einer Komponente komplette Subsysteme sind.

7. Verfahren nach Anspruch 5,
**dadurch gekennzeichnet, dass** Komponenten Referenzen auf andere Subsysteme enthalten.

8. Verfahren nach einem der Ansprüche 5 bis 7,
**dadurch gekennzeichnet, dass** aus Subsystemen logische Netzwerke gebildet sind.

9. Verfahren nach einem der Ansprüche 5 bis 8,
**dadurch gekennzeichnet, dass** mindestens eine Komponente des Subsystems einen Speicher für Daten implementiert.

10. Verfahren nach Anspruch 9,
**dadurch gekennzeichnet, dass** der Speicher auch Daten zur Identifizierung des Subsystems enthält.

11. Verfahren nach einem der Ansprüche 5 bis 10,
**dadurch gekennzeichnet, dass** mindestens eine Komponente eine Kommunikationsschnittstelle zum Empfang von Anfragen von außen und zur Beantwortung enthält.

12. Verfahren nach Anspruch 11,
**dadurch gekennzeichnet, dass** in der Kommunikationsschnittstelle standardisierte Protokolle empfangen, gelesen und versendet werden.

13. Verfahren nach Anspruch 12,.
**dadurch gekennzeichnet, dass** die Protokolle die gleiche textuelle Notation verwenden.

14. Verfahren nach einem der Ansprüche 11 bis 13,
**dadurch gekennzeichnet, dass** die Zugriffsrechte auf eine Komponente über die Kommunikationsschnittstelle geregelt und gespeichert sind.
